# EUROPÄISCHE PATENTSCHRIFT

(11) **EP 1 627 833 B1**
(45) Veröffentlichungstag und Bekanntmachung des Hinweises auf die Patenterteilung: **18.10.2006**
(21) Anmeldenummer: 05090217.0
(22) Anmeldetag: 26.07.2005
(51) Int. Cl.: B65G 39/16

(54) **Anordnung zum zentrierten Führen von Fördergurten**
Conveyor belts aligning device
Dispositif centreur pour convoyeurs à bande

(30) Priorität: 18.08.2004 DE 102004039970
(43) Veröffentlichungstag der Anmeldung: 22.02.2006
(73) Patentinhaber: Fachhochschule Lausitz, 01968 Senftenberg (DE)
(72) Erfinder: Biegel, Peter, 01968 Senftenberg (DE); Christiansen, Annemarie, 03042 Cottbus (DE); Fischer, Peter, 04910 Haida (DE); Höntzsch, Doris, 01983 Grossräschen (DE); Laass, Steffen, 01968 Senftenberg (DE); Neukirch, Sven, 15907 Lübben (DE); Müller, André, 04938 Uebigau (DE); Wegener, Sven, 03046 Cottbus (DE)
(74) Vertreter: Seltmann, Reinhard

(56) Entgegenhaltungen:
- DE-A1- 3 108 226
- FR-A- 1 435 953
- US-A- 2 160 057
- US-A- 2 718 156
- US-A- 5 950 806

## Beschreibung

Die Erfindung betrifft eine Anordnung zum zentrierten Führen von Fördergurten, vorzugsweise solchen, die auf Grund ihrer Breite und Förderlänge einer hohen Zugbelastung unterliegen.

Fördergurte, insbesondere von solchen Gurtförderanlagen, mit denen erhebliche Mengen von Schüttgütern transportiert werden, führen oft über erhebliche Entfernungen von einigen Hunderten von Metern. Dabei wird der Fördergurt mit seinem oberen Teil, dem sogenannten Obertrum, sowie dem unteren Teil, dem sogenannten Untertrum, über eine Vielzahl von Fördergurtrollen gestützt und geführt, die in einem zweckmässig aufgebauten Traggestell gelagert sind. Der Antrieb des Fördergurtes erfolgt über motorgetriebene Antriebsrollen, über die der Vorschub in den Fördergurt initiiert wird.

Auf Grund eines häufig hohen Volumenstroms werden leistungsfähige Gurtförderanlagen heute mit Gurtbreiten bis zu 3 m ausgeführt. Des weiteren erwachsen grosse Belastungen im Betrieb durch erhebliche Transportstrecken und Förderhöhen. Die bei diesen Breiten einzuleitenden Zugkräfte in den Fördergurt und die daraus resultierenden Spannungen in der Gurtförderanlage und insbesondere im Fördergurt sind erheblich und bei grösseren Längen schwierig beherrschbar. Problematisch ist, dass jegliche Art von unvorhergesehenem Lauf des Gurtes zu einer Steigerung seiner Beanspruchung und zur Verkürzung seiner Liegezeit führt. Das ist zwar ebenfalls bei Gurten geringer Breite so, jedoch sind die Folgen bei Gurten grösserer Breite unvergleichlich höher.

Die Kontrolle der Spur des Fördergurtes bedarf deshalb der ständigen Überwachung. Korrekturen können erfolgen, soweit noch möglich, durch Korrektur der Lage einzelner insbesondere stark belasteter Fördergurtrollen, indem deren im Normalfall im rechten Winkel zur Transportrichtung stehende Querachse eine andere Lage erhält, sodass eine einem registrierten Schieflauf entgegenwirkende resultierende Kraft eingeleitet wird, wie das beispielsweise in den DE-Schriften 201 02 365 und DE 69513 253 T2 vorgeschlagen wird. Diese Lösungen sind bei stark belasteten und vor allen Dingen Fördergurten grosser Länge nicht erfolgversprechend einsetzbar, da eine Einflussnahme ausschliesslich an der Umlenkrolle nicht ausreichend ist. Gelingt das nicht, ist der Betrieb des Fördergurtes auszusetzen, möglichst bevor es zu dessen Zerreissen kommt, und der Fördergurt ist mit üblichen technischen Mitteln unter Umständen neu zu verlegen.

Deshalb wurden Hilfsvorrichtungen entwickelt, die die Spurhaltung des Fördergurtes beeinflussen, indem dieses in Abhängigkeit vom eingetretenen Schieflauf selbsttätig quer zur Transportrichtung eine Korrektur der Krafteinleitung erfährt. So wird nach der DE 199 01 782 A1 beispielhaft wie in anderen Erfindungsbeschreibungen ebenfalls vorgeschlagen, am Obertrum seitlich des Fördergurtes Leitrollen einzusetzen, die den Fördergurt in der Spur halten sollen. Diese Ausführung hat sich ebenfalls am Untertrum durchgesetzt, obwohl recht schnell Gurtkantenbeschädigungen eintreten und beachtliche Kräfte zwischen Fördergurtrollen und Gurt entstehen, die, zwar zeitverzögert, ebenfalls zur Zerstörung des Fördergurtes führen.

Nach der EP-Schrift 0 781 248 B1 wird eine freilaufende Spurrolle für Gurtförderer vorgeschlagen, bei der eine Leitrolle mittig in ihrem Inneren frei drehbar und in Grenzen schwenkbar als sogenannte Kipptragrolle ausgebildet und gelagert ist. Des weiteren weist die Spurrolle an ihren Enden eine leichte Konizität auf. Verläuft der Fördergurt, gerät er in Bereiche, wo unterschiedliche Umfangsgeschwindigkeiten auf den Fördergurt einwirken, sodass der Fördergurt in den mittigen neutralen Bereich der Spurrolle zurückgeführt wird. Versuche haben ergeben, dass eine sichere Funktion bei Gurtbreiten über 1800 mm Breite nicht mehr gegeben ist, da die dann auftretenden Kräfte nicht mehr durch einfaches Aufliegen des Fördergurtes auf der erfindungsgemäss ausgestalteten Leitrolle überwunden werden können. Die dann wirkenden Kräfte übersteigen die als Lenkkraft wirkenden Reibkräfte und können bis zu einem Vielfachen ansteigen. Der Konstrukteur ist hier hinsichtlich der Dimensionierung der Leitrolle durch den Innendurchmesser der Spurrolle und des Lagers eingeschränkt. Der Durchmesser der Leitrolle kann nicht unendlich vergrössert werden, und bei Gurtbreiten breiter 1500 mm kommt es zur Durchbiegung der Achse sowie zu Unwuchten und zur Funktionsunfähigkeit. Diese Erscheinungen können unter Umständen bis zur Zerstörung des Gurtes führen.

Gemäss der Schrift US-A-5 950 806 wird eine Lenkrollenvorrichtung vorgeschlagen, bei der der Fördergurt zwischen zwei übereinanderliegenden federbelasteten Lenkrollen hindurchgeführt wird. Diese Lenkrollen sind in einem Rahmen gelagert, der mittig gegenüber der Gurtförderanlage gelagert ist, wobei sein Ausschwenken ausschliesslich durch Fühlerrollen gesteuert wird, die dem seitlichen Verlaufen des Fördergurtes folgen und die gegenüber dem Rahmen der Gurtförderanlage mit den Lenkrollen festgelegt sind, sodass sie das Ausschwenken des Rahmens mit den Lenkrollen im Lager hervorrufen. Die erfindungsgemässe Lösung ist für grössere Fördergurtbreiten nicht einsetzbar, da grössere Lenkkräfte ausschliesslich durch die Federbelastung entwickelt werden müssen und nur Teilbereiche der Fördergurtbreite durch die Lenkrollen geführt sind. Ebenso sind negative Auswirkungen auf die Gurtkanten vorhanden.

Nach der US-Schrift 2,718,156 werden Rollenpaare vorgeschlagen, die in den Randbereichen eines Fördergurtes paarweise gegenüberliegend eine Lenkbewegung ausüben sollen. Die Rollenpaare sind jeweils um eine Senkrechte schwenkbar, die ausserhalb der Fördergurtbreite liegt. Sie weisen des weiteren Leitbleche auf, die im Sinne von seitlichen Führungsrollen wirken und den Anstellwinkel des jeweiligen Rollenpaares steuern. Damit beide korrespondierend arbeiten, sind sie durch eine Art Spurstange miteinander verbunden. Diese vorgeschlagene Lösung ist für das Beherrschen des Schieflaufes grosser Bandbreiten nicht geeignet, da hinreichende Kräfte zur Korrektur des Laufes insbesondere breiter Fördergurte nicht beherrscht werden können. Ausserdem ist der mechanische Aufwand erheblich, indem die Leichtgängigkeit der Spurstange erhalten bleiben muss, sodass sich eine grössere Störanfälligkeit einstellt. Insbesondere sind negative Auswirkungen auf die Gurtkanten vorhanden.

Nach der DE-Schrift 31 08 226 A1 wird eine Steuervorrichtung für Fördergurte vorgeschlagen, bei der ein Teil der Breite eines Fördergurtes zunächst zwischen 2 paarweisen Fördergurtrollen hindurchgeführt wird. Diese sind ausserhalb und seitlich des Fördergurtes schwenkbar gelagert. Des weiteren weisen beide Walzen einen mechanischen Antrieb auf. Durch Taster, die einen Schieflauf des Fördergurtes registrieren, wird über ein hydraulisches oder pneumatisches System der Druck, den die beiden angetriebenen paarweise ausgebildeten Fördergurtrollen ausüben, verändert, sodass der Schieflauf korrigiert werden soll. Auch hier ist es durch die einseitige Anlenkung und bezogen auf die Breite partielle Einflussnahme nicht möglich, Fördergurte erheblicher Breite hinsichtlich eines eingetretenen Schieflaufes zu korrigieren, da hinreichende Kräfte nicht eingetragen werden können. Des weiteren besteht die Einrichtung aus einer Vielzahl mechanischer, miteinander korrespondierender Teile, die störanfällig sind.

Die Lösungen gemäss den DE-Schriften 876 827 sowie 1 705 291 beinhalten Anordnungen, bei denen ein Fördergurt auf einer dreigeteilten Fördergurtrolle aufliegt, wobei die beiden äusseren Fördergurtrollen an ihrem jeweils äusseren Lager leicht verschieblich sind, um den Fördergurt wieder zur Mitte der ursprünglichen Bahn hinzulenken. Ebenso wird auf die Wirkung der Schwerkraft abgestellt. Die Schrift FR 1 435 953 ist gleichermassen zu bewerten. Auch hier ist das Einleiten grosser Kräfte nicht möglich, sodass ein Einsatz bei Fördergurten mit Fördergurtbreiten von 2000 mm und mehr nicht gegeben ist.

Aufgabe der Erfindung ist es deshalb, eine Lösung vorzuschlagen, mittels der ebenfalls Fördergurte grösserer Breite, im wesentlichen bei 2000 mm Breite und mehr, sicher auf Gurtförderern geführt werden können und ein Verlaufen durch Aufbau einer grösseren Lenkkraft vermieden wird.

Die Aufgabe wird gelöst, indem im Untertrum einer Gurtförderanlage eine Anordnung gemäss Patentanspruch 1 ausgebildet ist. Damit wird eine Durchbiegung einer aus einer Länge gefertigten unteren Tragrolle vermieden, was insbesondere bei Fördergurtbreiten im Bereich 1600 mm und mehr von ausserordentlicher Bedeutung ist.

Um die einzuleitenden Kräfte zu beherrschen, ist die obere Fördergurtrolle in einer ständig federbelasteten Schwinge gelagert, sodass eine Druck in Richtung der unteren Fördergurtrolle erzeugt wird. Als Feder ist vorzugsweise ein progressiv wirkendes Gummifederelement vorhanden. Die obere Fördergurtrolle kann mit ihrer Mittelachse vor der unteren Fördergurtrolle liegend, darüberliegend oder dahinterliegend ausgebildet sein. Ebenso können wenigstens zwei obere Fördergurtrollen hintereinanderliegend vorhanden sein.

Die die Quertraverse tragende Anordnung ist vertikal im rechten Winkel zur Laufrichtung des Fördergurtes höhnenverstellbar und um ihre Achse schwenkbar ausgebildet. Dazu bietet die Praxis zweckmässige bekannte Konstruktionen an, wie eine derartige beispielhaft in DE 94 17 737.6 U1 beschrieben ist. Durch diese Ausbildung verringert sich die nach unten hin wirkende Bauhöhe der Anordnung und das Eigengewicht des nahezu tangierenden Gurtabschnitts erzeugt zusätzlich Reibkraft. Ist eine Umkehr der Laufrichtung des Fördergurts beabsichtigt, ist die die Quertraverse tragende Anordnung abbaubar und entgegengesetzt wieder anbaubar.

Die Anordnung kann ebenfalls so ausgeführt sein, dass das Schwenken der die Anordnung tragenden Quertraverse durch die Fördergurtlaufrichtung gesteuert wird, indem die Fördergurtlaufrichtung ermittelnde Einrichtungen ausgebildet sind, die auf der Basis von der erfassten Laufrichtung entsprechenden Signalen die ein Schwenken und Festlegen der Quertraverse ermöglichenden Einrichtung steuern.

Um die von der vorgeschlagenen Einrichtung ausgehende, auf den Fördergurt wirkende Steuerwirkung zu erhöhen, ist es zweckmässig, die höhenmässige Einstellung so zu wählen, dass die Linie, die die wenigstens eine obere Fördergurtrolle und die untere Tragrolle verbindende Gerade halbiert und die Mittellinie des Fördergurts darstellt, aus der Ebene der tangierenden Berührungslinie des im Untertrum laufenden Fördergurts nach oben hin abhebend ausgebildet ist. Durch eine Vergrösserung der Lauffläche wird die einzuleitende Kraft und damit die Steuerwirkung der Anordnung erhöht.

Zusätzlich können die Fördergurtrollen ebenso als Kipptragrollen ausgebildet sein.

Ein weiterer erfindungsgemässer Vorschlag beinhaltet, wenigstens eine der beiden Fördergurtrollen mit einem eine erhöhte Reibkraft initiierenden Element auszurüsten. Dieses eine erhöhte Reibkraft initiierende Element kann als Antriebseinheit oder als Bremseinheit ausgeführt sein, es können jedoch ebenso beide Funktionen in einer Einheit vereinigt sein. Zweckmässig ist es in diesem Zusammenhang, die Fördergurtrolle, über die Zusatzmomente eingeleitet werden, mit einer rauhen Oberfläche auszubilden. Ebenso zweckmässig ist es, dafür die untere als Tragrolle wirkende Fördergurtrolle vorzusehen.

Durch die Verwendung einer autarken Antriebseinheit wird der Kraftvektor der über die Führungsrollen initiierten Reibkraft um die Antriebs- oder Bremskraft des eine Reibkraft initiierenden Elements verlängert.

Sind Antriebs- und Bremseinheit als eine Einheit bildend ausgebildet, wird vorzugsweise ein frequenzgeregelter mit Frequenzumrichter ausgerüsteter Elektromotor als Antriebseinheit eingesetzt wird.

Die Anordnung kann ebenfalls entsprechende Sensor- und Aktortechnik aufweisen. Die Sensoren dienen dazu, den mittigen Lauf zu kontrollieren. Werden Differenzwerte festgestellt, sind das Anzeichen für beginnenden Schieflauf, und die als Aktortechnik wirkende Antriebseinheit und/oder die Bremseinheit können über eine Ansteuerung in Abhängigkeit von den Betriebsbedingungen zu- oder abgeschalten werden, um zusätzlich auf den Fördergurt einflussnehmende Steuerwirkung zu erzeugen.

Der vorgeschlagenen Lösung in allen ihren Varianten liegen nachstehende Erkenntnisse zugrunde:
- Der Fördergurt wird nicht zentriert, wenn der Druck durch die Fördergurtrollen und daraus resultierend die Reibkraft zu gering ist,
- Wird der Druck auf die Fördergurtrollen zu gross, wird ebenfalls keine Zentrierwirkung erreicht, da die Kraft, mit der der Fördergurt gegen die Zentrierung wirkt, nicht kompensiert wird.

Die Erfindung ist insoweit geeignet, über die durch die vorgeschlagenen Anlenkungsprinzipien die selbsttätige Aussteuerung des Schieflaufes von Fördergurten auch grösserer Breite im Untertrum deren Betriebssicherheit wesentlich zu gewährleisten und Verluste infolge Stillstands und Reparatur oder gar vorzeitiger Zerstörung zu verringern. Durch Schwingungen entstehende Spannungsspitzen, die regelmässig eine Überlastung der Antriebselemente und der Rahmenkonstruktion nach sich ziehen, werden durch die erfindungsgemässe Ausbildung abgebaut.

Die Erfindung soll nachstehend an einem Ausführungsbeispiel näher erläutert werden.

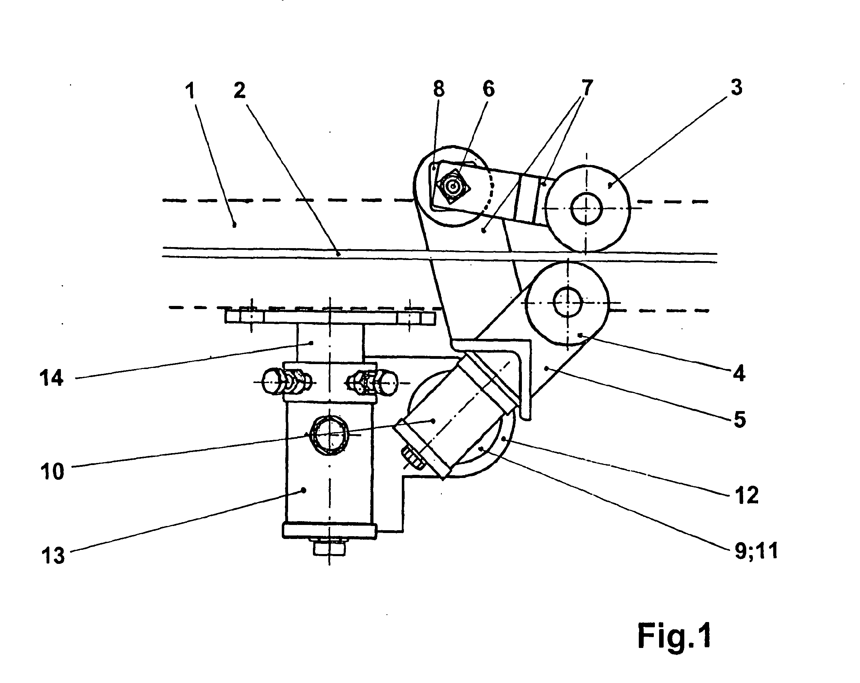

In der zugehörigen Zeichnung zeigt
- Fig. 1: die seitliche Ansicht der Prinzipdarstellung der erfindungsgemässen Lösung im Schnitt mit angedeutem Rahmen,

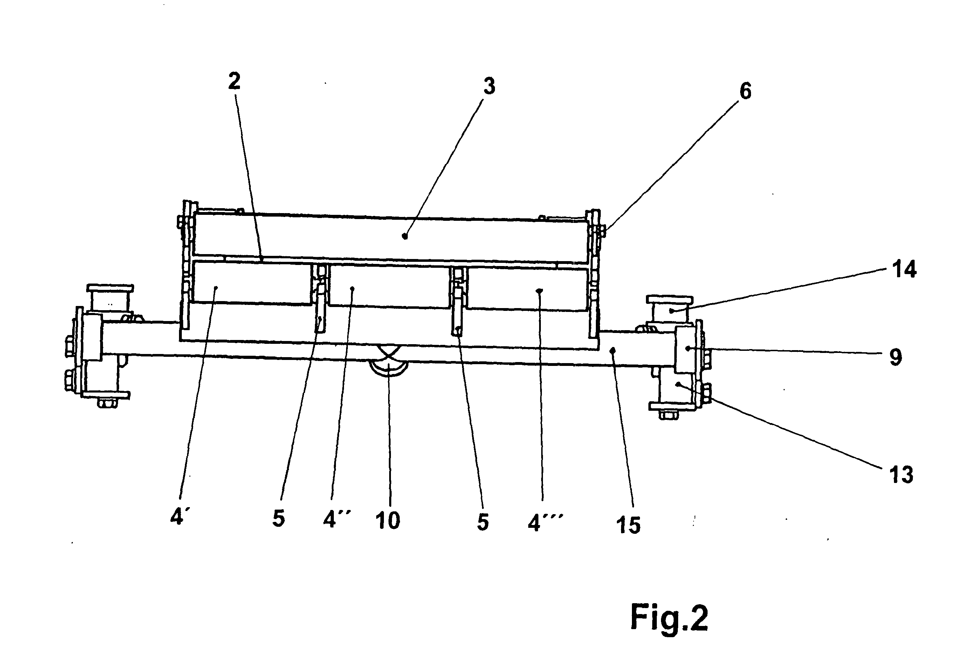

- Fig. 2: die Ansicht in Laufrichtung der im Untertrum eines Fördergurtes einer Gurtförderanlage erfindungsgemäss ausgebildeten Anordnung gemäss Fig. 1, wobei auf die Darstellung des Rahmens verzichtet worden ist.

In einem Kohletagebau befindet sich eine Gurtförderanlage mit 2400 mm Breite, die über 300 m Länge zur Verladestelle führt.

In einem Rahmen 1 dieser Gurtförderanlage sind im Untertrum in der normalen Ebene der Rückführung des Fördergurtes 2 jeweils eine obere Fördergurtrolle 3 und eine untere Fördergurtrolle 4 ausgebildet, zwischen denen der Fördergurt 2 hindurchläuft. Die untere Fördergurtrolle 4 ist hinsichtlich ihrer Längsausdehnung und da- mit quer zur Laufrichtung des Fördergurtes 2 beispielhaft dreifach unterteilt, sodass Fördergurtteilrollen 4'; 4''; 4''' und zwischen diesen einzelnen Fördergurtteilrollen 4'; 4''; 4''' nochmals Stützlager 5 entstanden sind.

Zwischen der oberen Fördergurtrolle 3 und die Fördergurtteilrollen 4'; 4''; 4''' ist der Fördergurt 2 deren äussere Mantellinie tangierend hindurchgeführt. Die obere Fördergurtrolle 3 ist über eine Achse 6 in einer horizontalen Ebene bezogen auf die Fördergurtteilrollen 4'; 4''; 4''' schwenkbar ausgestaltet. Beide sind über eine Schwinge 7, die über ein federbelastetes Knickgelenk 8 verfügt, zueinander festgelegt. Das federbelastete Knickgelenk ist beispielhaft als wartungsfreies Gummi-Torsionsfederelement so ausgeführt, dass die obere Fördergurtrolle 3 einen Druck auf die unteren Fördergurtteilrollen 4'; 4''; 4''' erzeugend und den Fördergurt 2 klemmend ausgeführt ist.

Die aus oberer Fördergurtrolle 3 und unteren Fördergurtteilrollen 4'; 4''; 4''' bestehende Anordnung ist über eine Quertraverse 15 in der Neigungsvorrichtung 9 gelagert und im Verhältnis zu dieser um die Achse eines Pivotzapfens 10 schwenkbar ausgebildet, wobei die Neigungsvorrichtung 9 über Drehzapfen 11 in Lagern 12 im Rahmen 1 der Gurtförderanlage gelagert ist. Diese Lager 12 sind in einer höhenverstellbaren Aufnahme 13 ausgebildet.

Damit läuft der Fördergurt 2 im wesentlichen schlupffrei zwischen der oberen Fördergurtrolle 3 und den unteren Fördergurtteilrollen 4'; 4''; 4''' hindurch.

Oberer Fördergurtrolle 3 und untere Fördergurtteilrollen 4'; 4''; 4''' sind aus der Flucht des Untertrums beziehungsweise aus der Ebene der tangierenden Berührungslinie des im Untertrum laufenden Fördergurtes 2 abgehoben ausgebildet, indem diese nach oben verschoben sind. Falls eine abnehmende Spannung des Fördergurtes 2 das erfordert, kann die nach oben wirkende Verschiebung nachgestellt werden, indem eine Neueinstellung beziehungsweise Anpassung über die höhenverstellbaren Aufnahme 13 vorgenommen wird. Soll der Einstellwinkel des Pivotzapfens 10 beibehalten werden, wird die Quertraverse 15 mit der gesamten höhenverstellbare Aufnahme 13 auf ihrer Halterung 14 nach oben verschoben. Soll der Einstellwinkel des Pivotzapfens 10 verändert werden, kann die gesamte Aufnahme 13 in den Lagern 12 verschwenkt werden.

Damit ist die tangierende Berührungslinie des im Untertrum laufenden Fördergurtes 2, die im Idealfall eine Gerade darstellt, ein an den äusseren Radius der unteren Fördergurtteilrollen 4'; 4"; 4''' angepasster Kreisbogen geworden. Damit vergrössert sich eine über die Fördergurtteilrollen 4'; 4''; 4''' initiierte Lenkkraft entschieden. Die nach unten wirkende vergrösserte Bauhöhe der erfindungsgemässen Anordnung verringert sich ebenso.

Zusätzlich weisen die Oberflächen der oberen Fördergurtrolle 3 und der unteren Fördergurtteilrollen 4'; 4''; 4''' eine den Reibwert erhöhende Beschichtung auf, indem ein abrasiv wirkender hochfester Belag auf Chrom-Nickel-Basis aufgespritzt worden ist.

Hat der Fördergurt 2 das Bestreben, zu verlaufen und seitlich auszubrechen, stellt sich die obere Fördergurtrolle 3 und untere Fördergurtteilrollen 4'; 4''; 4''' aufweisende Einrichtung über die Achse des Pivotzapfens 10 leicht leicht schräg zur Laufrichtung und der Fördergurt 2 hat das Bestreben, auf Grund der sich einstellenden Lenkkraft zur Mitte zurückzulaufen.

### Bezugszeichen:

| | |
|---|---|
| Rahmen | 1 |
| Fördergurt | 2 |
| obere Fördergurtrolle | 3 |
| untere Fördergurtrolle | 4 |
| Stützlager | 5 |
| Achse | 6 |
| Schwinge | 7 |
| federbelastetes Knickgelenk | 8 |
| Neigungsvorrichtung | 9 |
| Pivotzapfens | 10 |
| Drehzapfen | 11 |
| Lager | 12 |
| höhenverstellbare Aufnahme | 13 |
| Halterung | 14 |
| Quertraverse | 15 |

## Patentansprüche

1. Anordnung zum zentrierten Führen eines Fördergurtes (2) einer Gurtförderanlage, die aus einem Rahmen (1) und eines zwischen den Rahmenlängsträgem laufenden Fördergurtes (2) besteht, vorzugsweise eines solchen, der auf Grund seiner Breite, seiner Förderlänge und der zu überwindenden Förderhöhe einer hohen Zugbelastung unterliegt, die Anordnung unter dem Untertrum des Fördergurtes (2) in einer Quertraverse (15) liegend angeordnet und in einem Pivotzapfen (10) gelagert ist, der auf der projektierten Mittellinie der Gurtförderanlage angeordnet ist sowie der zu zentrierende Fördergurt (2) zwischen im Verhältnis ihres Abstandes zueinander durch Federkraft belasteten oberen und unteren Fördergurtrollen (3; 4) hindurchgeführt ist, **dadurch gekennzeichnet, dass**
- die Mittelachse des Pivotzapfens (10) von der Senkrechten abweichend in Laufrichtung des Fördergurtes (2) geneigt,
- die Mittelachsen von oberer Fördergurtrolle (3) und unterer Fördergurtrolle (4) mittig über der Mittelachse des Pivotzapfens (10) liegend ausgebildet
- die die Mittelpunkte der im Verhältnis ihres Abstandes zueinander durch Federkraft belasteten obere Fördergurtrolle (3) und untere Fördergurtrolle (4) verbindende Gerade zur ebenfalls den Mittelpunkt der unteren Fördergurtrolle (4) schneidenden Mittelachse des Pivotzapfens (10) einen stumpfen Winkel bildend ausgebildet sowie
- die untere der zueinander belasteten Fördergurtrollen (4) aus mehreren auf einer identischen Achse liegenden Fördergurtteilrollen (4' bis 4) identischen Durchmessers bestehend ausgeführt ist und
- zwischen diesen mehreren auf identischer Achse liegenden Fördergurtteilrollen (4' bis 4) mindestens ein Stützlager (5) angeordnet ist.

2. Anordnung nach Anspruch 1, **dadurch gekennzeichnet, dass**
- die obere Fördergurtrolle (3) im Verhältnis zur unteren Fördergurtrolle (4) in einer Schwinge (7) mit einem federbelasteten Knickgelenk (8) gelagert ist, die eine den Druck in Richtung der unteren Fördergurtrolle (4) erzeugende Torsionsfeder aufweist.

3. Anordnung nach Anspruch 2, **dadurch gekennzeichnet, dass**
- die Torsionsfeder ein progressiv wirkendes Gummifederelement ist.

4. Anordnung nach Anspruch 3, **dadurch gekennzeichnet, dass**
- die Länge der Arme der Schwinge (7) so zueinander gewählt ist, dass die obere Fördergurtrolle (3) mit ihrer Mittelachse bezogen auf die Vertikale in Laufrichtung vor der Mittelachse der unteren Fördergurtrolle (4) liegt.

5. Anordnung nach einem der Ansprüche 1 bis 4, **dadurch gekennzeichnet, dass**
- die die Anordnung tragende Quertraverse (15) in ihren Aufhängungspunkten um ihre Mittelachse schwenk- und festlegbar ausgeführt ist.

6. Anordnung nach einem der Ansprüche 1 bis 3 und 5, **dadurch gekennzeichnet, dass**
- das Schwenken der die Anordnung tragenden Quertraverse (15) durch die Fördergurtlaufrichtung gesteuert wird, indem die Fördergurtlaufrichtung ermittelnde Einrichtungen ausgebildet sind, die auf der Basis von der erfassten Laufrichtung entsprechenden Signalen die ein Schwenken und Festlegen der Quertraverse (15) ermöglichenden Einrichtung steuern.

7. Anordnung nach einem der Ansprüche 1 bis 6, **dadurch gekennzeichnet, dass**
- mindestens eine der Fördergurtrollen (3; 4) mit einem eine erhöhte Reibkraft initiierenden Element verbunden ist.

8. Anordnung nach einem der Ansprüche 1 bis 7, **dadurch gekennzeichnet, daß**
- die Fördergurtrollen (3; 4) Kipptragrollen sind, die als um zwei in ihrem Inneren jeweils auf einer Achse mittig gelagerte, um ihren Lagerungspunkt schwenkbare Fördergurtrollen ausgeführt sind.

9. Anordnung nach einem der Ansprüche 1 bis 3 und 5 bis 8, **dadurch gekennzeichnet, dass**
- oberhalb des Untertrums in Laufrichtung des Fördergurtes (2) hintereinanderliegend mehr als eine obere Fördergurtrolle (3) ausgebildet ist.

10. Anordnung nach einem der Ansprüche 7 bis 9, **dadurch gekennzeichnet, dass**
- als eine erhöhte Reibkraft initiierendes Element eine wenigstens eine der Fördergurtrollen (3; 4) antreibende autarke Antriebseinheit ausgeführt ist, um die mit ihr verbundene Fördergurtrolle (3; 4) auf eine im Verhältnis zur linearen Bandgeschwindigkeit grössere Umfangsgeschwindigkeit beschleunigen zu können.

11. Anordnung nach einem der Ansprüche 7 bis 9, **dadurch gekennzeichnet, dass**
- als eine erhöhte Reibkraft initiierendes Element eine mit wenigstens einer der Fördergurtrollen (3; 4) verbundene Bremseinheit ausgebildet ist.

12. Anordnung nach einem der Ansprüche 7 bis 9, **dadurch gekennzeichnet, dass**
- als eine erhöhte Reibkraft initiierendes Element eine Antriebs- und Bremsmomente initiierende Einheit ausgeführt ist.

13. Anordnung nach einem der Ansprüche 1 bis 12, bei der
- wenigstens eine der Fördergurtrollen (3; 4) auf ihrer den Fördergurt (2) tangierenden Umgangsfläche eine rauhe Oberfläche aufweisend ausgebildet ist.

14. Anordnung nach einem der Ansprüche 11 bis 13, **dadurch gekennzeichnet, dass**
- den Schieflauf des Fördergurtes (2) überwachende Sensoren vorhanden sind, die
- auf üblichem Wege mit dem eine erhöhte Reibkraft initiierenden Element verbunden sind, um diese beim Erfassen von Differenzwerten in Abhängigkeit von den Betriebsbedingungen zu- oder abzuschalten.

15. Anordnung nach einem der Ansprüche 1 bis 14, **dadurch gekennzeichnet, dass**
- die Linie, die die wenigstens eine obere und die untere Fördergurtrolle (3; 4) verbindende Gerade im rechten Winkel halbiert, aus der Ebene der tangierenden Berührungslinie des im Untertrum laufenden Fördergurtes (2) nach oben hin abhebend ausgebildet ist.

## Claims

1. Arrangement for the centred guidance of a conveyor belt (2) of a belt conveyor system consisting of a frame (1) and a conveyor belt (2) running between the longitudinal supporting members of the frame, and preferably one which is subject to a high tensile loading because of its width, its transport length and the delivery height to be overcome, which arrangement is arranged lying under the bottom drum of the conveyor belt (2) in a transverse beam (15) and is supported in a pivot journal (10), which is arranged on the projected centre line of the belt conveyor system, and the conveyor belt (2) to be centred is caused to pass between top and bottom conveyor belt rollers (3; 4) that are subjected to loading by spring force in relation to their relative distance from one another, **characterized in that**
- the central axis of the pivot journal (10) is inclined away from the vertical line in the direction of operation of the conveyor belt (2),
- the central axes of the top conveyor belt roller (3) and the bottom conveyor belt roller (4) are executed lying centrally above the central axis of the pivot journal (10),
- the straight line connecting the middle points of the top conveyor belt roller (3) and the bottom conveyor belt roller (4) that are subjected to loading by spring force in relation to their relative distance from one another to the central axis of the pivot journal (10) which also intersects the central point of the bottom conveyor belt roller (4) in such a way as to form an obtuse angle, and
- the lower of the conveyor belt rollers (4) loaded in relation to one another is executed from several conveyor belt part rollers (4' to 4) of identical diameter lying on an identical axis, and
- at least one supporting bearing (5) is arranged between these several conveyor belt part rollers (4' to 4) lying on an identical axis.

2. Arrangement according to Claim 1, **characterized in that**
- the top conveyor belt roller (3) is supported in relation to the bottom conveyor belt roller (4) in a rocker (7) with a spring-loaded articulated link (8), which exhibits a torsion spring for generating the pressure in the direction of the bottom conveyor belt roller (4).

3. Arrangement according to Claim 2, **characterized in that**
- the torsion spring is a rubber spring element with a progressive effect.

4. Arrangement according to Claim 3, **characterized in that**
- the lengths of the arms of the rocker (7) are selected in such a way in relation to one another that the top conveyor belt roller (3) lies with its central axis in relation to the vertical line in the direction of operation ahead of the central axis of the bottom conveyor belt roller (4).

5. Arrangement according to Claims 1 to 4, **characterized in that**
- the transverse beam (15) supporting the arrangement is executed in such a way that it is capable of being pivoted and securely attached about its central axis at its suspension points.

6. Arrangement according to one of Claims 1 to 3 and 5, **characterized in that**
- the pivoting of the transverse beam (15) supporting the arrangement is controlled by the direction of operation of the conveyor belt, **in that** devices are executed for determining the direction of operation of the conveyor belt which control the device permitting the pivoting and secure attachment of the transverse beam (15) on the basis of signals corresponding to the recorded direction of operation.

7. Arrangement according to one of Claims 1 to 6, **characterized in that**
- at least one of the conveyor belt rollers (3; 4) is attached to an element for initiating an increased frictional force.

8. Arrangement according to one of Claims 1 to 7, **characterized in that**
- the conveyor belt rollers (3; 4) are tipping supporting rollers, which are embodied as two conveyor belt rollers, centrally mounted on an axis in each case in their interior and capable of pivoting about their bearing point.

9. Arrangement according to one of Claims 1 to 3 and 5 to 8, **characterized in that**
- more than one top conveyor belt (3) is executed lying one after the other above the bottom drum in the direction of operation of the conveyor belt (2).

10. Arrangement according to one of Claims 7 to 9, **characterized in that**
- an independent drive unit driving at least one of the conveyor belt rollers (3; 4) is executed as an element for initiating increased frictional force, in order to be able to accelerate the conveyor belt roller (3; 4) connected to it up to a higher peripheral speed in relation to the linear belt speed.

11. Arrangement according to one of Claims 7 to 9, **characterized in that**
- a braking unit connected to least one of the conveyor belt rollers (3; 4) is executed as an element for initiating increased frictional force.

12. Arrangement according to one of Claims 7 to 9, **characterized in that**
- a unit for initiating driving and braking moment is executed as an element for initiating increased frictional force.

13. Arrangement according to one of Claims 1 to 12, in which
- at least one of the conveyor belt rollers (3; 4) is embodied on its peripheral surface touching the conveyor belt (2) in such a way that it exhibits a rough surface.

14. Arrangement according to one of Claims 11 to 13, **characterized in that**
- sensors for monitoring the skewed running of the conveyor belt (2) are provided, which
- are connected in a conventional fashion to the element for initiating an increased frictional force, in order to switch this on or off in conjunction with the recording of differential values depending on the operating conditions.

15. Arrangement according to one of Claims 1 to 14, **characterized in that**
- the line which halves the straight line connecting the at least one top and the bottom conveyor belt roller (3; 4) at right angles is executed in such a way that it rises in an upward direction from the plane of the tangent contact line of the conveyor belt (2) running in the bottom drum.

## Revendications

1. Agencement pour le guidage centré d'une courroie transporteuse (2) d'une installation de convoyeur à bande, qui se compose d'un cadre (1) et d'une courroie transporteuse (2) passant entre les supports longitudinaux du cadre, de préférence d'une telle courroie transporteuse, qui, en raison de sa largeur, de sa longueur de convoyage et de la hauteur de convoyage à surmonter, est soumise à une forte sollicitation en traction, l'agencement étant disposé à plat sous le tronçon inférieur de la courroie transporteuse (2) dans une traverse transversale (15) et étant supporté dans un tourillon de pivot (10), qui est disposé sur l'axe médian projeté de l'installation de convoyeur à bande et la courroie transporteuse (2) à centrer étant guidée entre des poulies supérieure et inférieure (3 ; 4) de courroie transporteuse sollicitées par une force de ressort par rapport à leur distance l'une par rapport à l'autre,
**caractérisé en ce que**
- l'axe médian du tourillon de pivot (10) est incliné dans la direction d'avance de la courroie transporteuse (2) en s'écartant de la verticale,
- les axes médians de la poulie supérieure (3) de la courroie transporteuse et de la poulie inférieure (4) de la courroie transporteuse sont disposés centralement au-dessus de l'axe médian du tourillon de pivot (10),
- la droite reliant les centres de la poulie supérieure (3) de la courroie transporteuse et de la poulie inférieure (4) de la courroie transporteuse sollicitées par une force de ressort par rapport à leur distance l'une par rapport à l'autre est réalisée en formant un angle obtus par rapport à l'axe médian du tourillon de pivot (10) coupant également le centre de la poulie inférieure (4) de la courroie transporteuse, et
- la poulie inférieure (4) des poulies de courroie la transporteuse sollicitées l'une par rapport à l'autre se compose de plusieurs poulies partielles de courroie transporteuse (4' à 4") de diamètre identique situées sur un axe identique, et
- entre ces plusieurs poulies partielles de courroie transporteuse (4' à 4") situées sur un axe identique est prévu au moins un palier de support (5).

2. Agencement selon la revendication 1, **caractérisé en ce que**
- la poulie supérieure (3) de la courroie transporteuse est supportée par rapport à la poulie inférieure (4) de la courroie transporteuse dans une bielle oscillante (7) avec une articulation pivotante (8) sollicitée par ressort, qui présente un ressort de torsion produisant la pression dans la direction de la poulie inférieure (4) de la courroie transporteuse.

3. Agencement selon la revendication 2, **caractérisé en ce que**
- le ressort de torsion est un élément de ressort en caoutchouc à action progressive.

4. Agencement selon la revendication 3, **caractérisé en ce que**
- la longueur des bras de la bielle oscillante (7) l'un par rapport à l'autre est choisie de telle sorte que la poulie supérieure (3) de la courroie transporteuse se situe avec son axe médian par rapport à la verticale dans la direction d'avance avant l'axe médian de la poulie inférieure (4) de la courroie transporteuse.

5. Agencement selon l'une quelconque des revendications 1 à 4, **caractérisé en ce que**
- la traverse transversale (15) supportant l'agencement est réalisée de manière à pouvoir être pivotée autour de son axe médian et fixée au niveau de ses points d'accrochage.

6. Agencement selon l'une quelconque des revendications 1 à 3 et 5, **caractérisé en ce que**
- le pivotement de la traverse transversale (15) portant l'agencement est commandé par la direction d'avance de la courroie transporteuse, **en ce que** des dispositifs détectant la direction d'avance de la courroie transporteuse sont réalisés, lesquels commandent, sur la base de signaux correspondants à la direction d'avance détectée, un dispositif permettant le pivotement et la fixation de la traverse transversale (15).

7. Agencement selon l'une quelconque des revendications 1 à 6, **caractérisé en ce que**
- au moins l'une des poulies de la courroie transporteuse (3 ; 4) est connectée à un élément amorçant une force de frottement accrue.

8. Agencement selon l'une quelconque des revendications 1 à 7, **caractérisé en ce que**
- les poulies de la courroie transporteuse (3 ; 4) sont des poulies à support basculant, qui sont réalisées sous la forme de deux poulies de courroie transporteuse montées centralement en leur intérieur, sur un axe respectif, et pouvant pivoter autour de leur centre d'appui.

9. Agencement selon l'une quelconque des revendications 1 à 3 et 5 à 8, **caractérisé en ce que**
- plus d'une poulie supérieure (3) de courroie transporteuse sont réalisées l'une derrière l'autre au-dessus du tronçon inférieur dans la direction d'avance de la courroie transporteuse (2).

10. Agencement selon l'une quelconque des revendications 7 à 9, **caractérisé en ce que**
- une unité d'entraînement autonome entraînant au moins l'une des poulies de la courroie transporteuse (3 ; 4) est réalisée sous forme d'un élément amorçant une force de friction accrue, afin de pouvoir accélérer la poulie de courroie transporteuse (3 ; 4) associée, à une vitesse périphérique supérieure par rapport à la vitesse de bande linéaire.

11. Agencement selon l'une quelconque des revendications 7 à 9, **caractérisé en ce que**
- une unité de freinage connectée à au moins l'une des poulies de la courroie transporteuse (3 ; 4) est réalisée sous la forme d'un élément amorçant une force de friction accrue.

12. Agencement selon l'une quelconque des revendications 7 à 9, **caractérisé en ce que**
- une unité amorçant un couple d'entraînement et de freinage est réalisée sous la forme d'un élément amorçant une force de friction accrue.

13. Agencement selon l'une quelconque des revendications 1 à 12, dans lequel
- au moins l'une des poulies de la courroie transporteuse (3 ; 4) est réalisée de façon à présenter sur sa surface périphérique tangente à la courroie transporteuse (2) une surface rugueuse.

14. Agencement selon l'une quelconque des revendications 11 à 13, **caractérisé en ce que**
- des capteurs contrôlant l'avance en biais de la courroie transporteuse (2) sont prévus, lesquels
- sont connectés de manière usuelle à l'élément amorçant une force de friction accrue, afin de connecter ou de déconnecter celui-ci lors d'une détection de valeurs différentielles en fonction des conditions de fonctionnement.

15. Agencement selon l'une quelconque des revendications 1 à 14, **caractérisé en ce que**
- la ligne qui coupe en deux à angle droit la droite reliant au moins une poulie supérieure et la poulie inférieure (3 ; 4) de la courroie transporteuse, est réalisée de manière à se soulever vers le haut hors du plan de la ligne de contact tangentielle de la courroie transporteuse (2) passant dans le tronçon inférieur.
